# EUROPEAN PATENT SPECIFICATION

(11) **EP 3 521 653 B1**
(45) Date of publication and mention of the grant of the patent: **12.01.2022**
(21) Application number: 19155105.0
(22) Date of filing: 01.02.2019
(51) Int. Cl.: F16F 9/02, F16F 9/36, F16K 17/00, F16K 17/38

(54) **GAS SPRING COMPRISING A SAFETY DEVICE**
GASFEDER MIT EINER SICHERHEITSVORRICHTUNG
RESSORT À GAZ COMPRENANT UN DISPOSITIF DE SÉCURITÉ

(30) Priority: 02.02.2018 IT 201800002366
(43) Date of publication of application: 07.08.2019
(73) Proprietor: Iveco S.p.A., 10156 Torino (IT)
(72) Inventor: AIMO BOOT, Marco, 10072 Caselle Torinese (TO) (IT)
(74) Representative: Faraldi, Marco

(56) References cited:
- DE-A1-102007 007 273
- DE-A1-102012 213 169
- DE-C1- 3 901 449
- DE-U1- 29 510 422
- JP-U- S5 590 836
- US-A- 4 901 594
- US-A- 5 064 030
- US-A- 5 735 371
- US-A- 6 019 356

## Description

### TECHNICAL FIELD

The invention relates to an air spring comprising a safety device, more in particular an air spring for commercial, heavy or off-road vehicles comprising a safety device aimed at preventing the stem of the air spring from being suddenly expelled.

### BACKGROUND ART

In movable opening and closing parts of vehicles, it is known to use air springs basically comprising a cylinder chamber where a piston, which is connected to a stem, slides. The cylinder and the stem are carried by elements of the transmission between which a dampening effect is to be generated. This dampening effect is ensured by a gas under pressure contained in the chamber and compressed or expanded depending on the movements of the piston, which is carried by the stem.

This gas usually is a gas under pressure and the coupling between the piston and the chamber is such as to keep the gas sealed in the cylinder chamber.

In some situations, for example following an accident or due to a fire in the vehicle, the temperature on the outside of the cylinder chamber can significantly increase. This increase generates a pressure increase in the chamber, which is such as to cause the gas spring to "explode", basically expelling the piston and the stem from the cylinder chamber.

This expulsion can be very dangerous, as the stem could hit people and/or objects at a great speed, thus causing serious damages.

Examples of known solution in the art are disclosed in documents DE3901449 C1, US5735371 A, US6019356 A, DE102007007273 A1, US 5064030A, US4901594 A or DE29510422 U1. Document DE 10 2012 213169 A1 discloses a hydraulic piston-cylinder device comprising a safety opening in the cylinder which is closed by a cover which is welded on the outer surface of the cylinder. The cover is destroyed when a pre-set temperature offset is exceeded. Document DE 10 2012 213169 A1 discloses the preamble of the claim 1.

However, there is a need to increase the safety of gas springs when the temperature of the environment around them exceeds the normal designing conditions.

### DISCLOSURE OF INVENTION

The object of the invention is to solve the above-mentioned technical problem in a simple and economic fashion.

The aforesaid object is reached by a means of a gas spring according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a perspective view, with an enlarged detail, of the gas spring according to the invention according to a preferred embodiment;
- figure 2 is a schematic, exploded, diametral sectional view of a portion of the gas spring of figure 1;
- figure 3 is a schematic, partially exploded, diametral sectional view of a portion of the gas spring of figure 1;
- figure 4 is a schematic, diametral sectional view of a portion of the gas spring of figure 1 in a first operating configuration;
- figure 5 is a schematic, diametral sectional view of a portion of the gas spring of figure 1 in a second operating configuration;
- figure 6 shows a perspective view, with an enlarged detail, of the gas spring according to the invention according to an alternative embodiment;
- figure 7 is a schematic, diametral sectional view of a portion of the gas spring of figure 6.

### BEST MODE FOR CARRYING OUT THE INVENTION

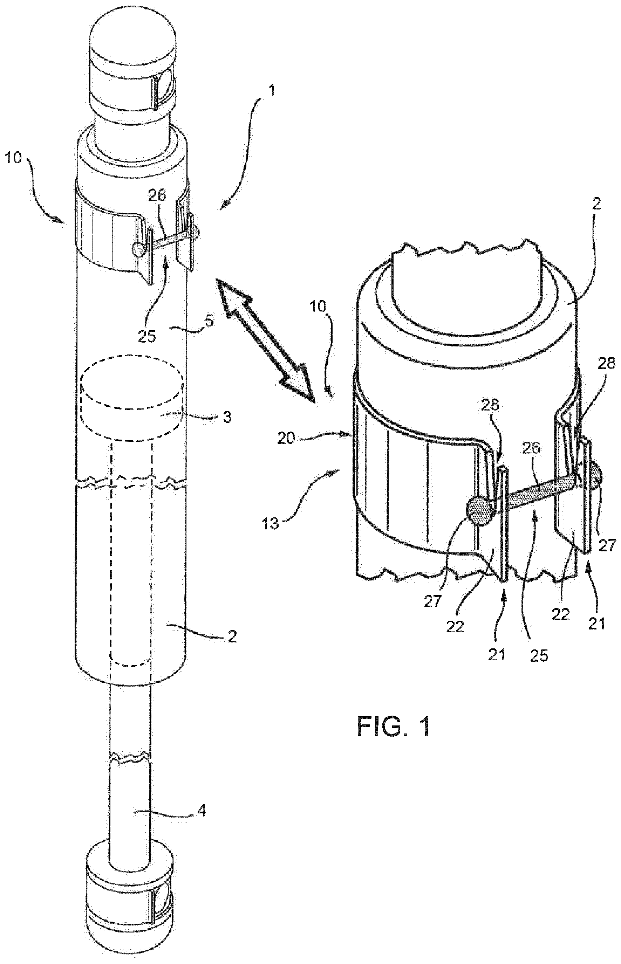

Figure 1 shows a known gas spring 1 basically comprising a cylinder 2 with axis A and a piston 3, which is connected to a stem 4 and is configured to slide, in a sealed manner, inside the cylinder 2, so as to define a chamber 5, which is adapted to contain the gas under pressure. The cylinder 2 and the stem 4 are further each configured to be connected to elements of the vehicle, for example the hood and the frame, whose relative movements need to be dampened. This dampening is obtained by the gas under pressure which exerts a reaction which is opposite and equal to the pushing or pulling force exerted upon the gas by the piston 3.

According to the invention, the gas spring 1 comprises a safety device 10, which is configured to allow the gas under pressure contained in the chamber 5 to flow out when the temperature of the environment on the outside of the gas spring 1 reaches a pre-set level.

According to a preferred embodiment, the safety device 10 comprises a seal element 11, for example a plastic material plug, which is configured to be inserted, in a sealing manner, in a respective hole 12 made in the cylinder 2 and configured to ensure a fluid communication between the chamber 5 and the environment. In particular, the seal element 11 is configured to remain housed, in a sealing manner, in the hole 12 as long as the temperature of the environment on the outside of the gas spring 1 is below a pre-set temperature, for example 150 °C, and to slip out of the hole 12 when the aforesaid temperature exceeds said pre-set threshold, thus allowing the gas under pressure to flow out of the chamber 5 into the environment.

The seal element 11 is advantageously held in the hole 12 by a sealing device 13, which is configured, below the aforesaid pre-set temperature, to generate a force that is such as keep the seal element 11 inside the hole 12, balancing the force of the gas under pressure acting, from the chamber 5, upon the seal element 11 in order to flow out into the environment. Above the aforesaid pre-set temperature, the seal element 11 is configured to exert a smaller sealing force (or to generate no force at all) than the one needed to keep the seal element 11 in the hole 12, thus allowing it to come out and, hence, the gas under pressure to flow from the chamber 5 to the environment.

The sealing device 13 advantageously comprises holding means 14, which are configured to change the aforesaid sealing force of the device 13 upon variation of the temperature. In particular, said holding means 14 are configured to allow the device 13 to generate a sealing force when the temperature is below the aforesaid threshold and to generate a smaller force (or no force at all) above said temperature threshold.

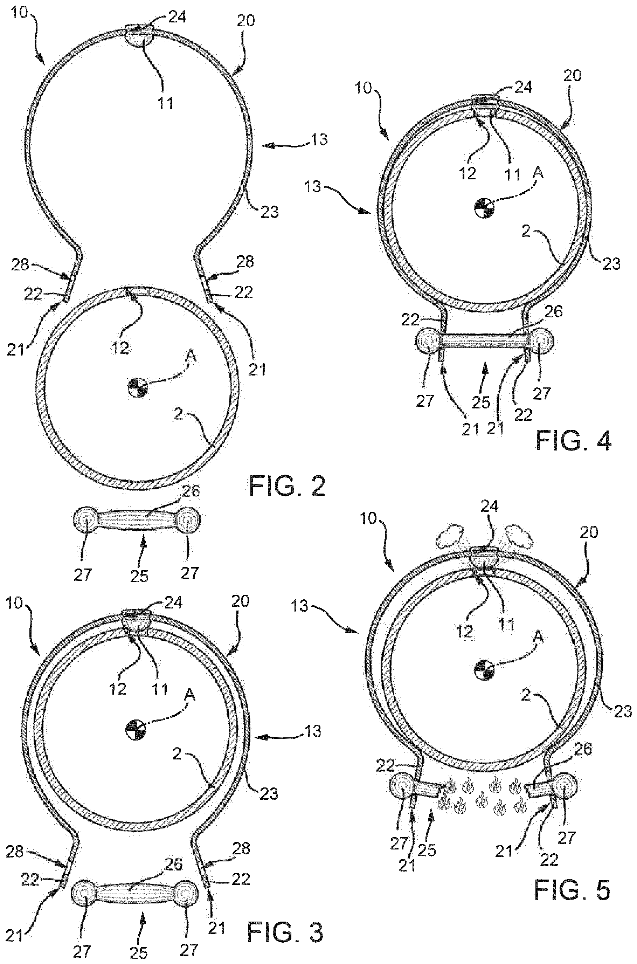

According to the preferred embodiment, which is shown in figures 2 to 5, the sealing device 13 comprises an open elastic ring 20 having to end portions 21 and a central portion 23. Advantageously, the ring 20 preferably is flat with a rectangular cross section and is housed around the cylinder 2 so that an radial inner surface thereof cooperates, in contact, with the radial outer surface of the cylinder 2. The ring 20 can further be configured to carry the seal element 11; to this aim, the ring 20 can comprise a hole 24, which is configured to carry, through interlocking, the seal element 11. The ring 20 is preferably made of a metal material, which is elastic enough to ensure the operation described above.

According to the embodiment described herein, the end portions 21 each comprise respective flanges 22 extending in a radial direction from the central portion 23, facing away from the cylinder 2 along a direction that joins the latter to its longitudinal axis A.

The sealing device 13 further comprises holding means 25, which are configured to hold the sealing device 13 in the two conditions of force exerted upon the seal element 11 described above, as a function of the environmental temperature around the gas spring 1.

According to this embodiment, the holding means 25 comprise a meltable element 26, which is made of a material that is such as to melt above the aforesaid temperature threshold. Said meltable element 26 is preferably made of a thermoplastic material. The meltable element 26 is conveniently housed between the end portions 21 and connects them to one another by means of a shape coupling.

In particular, according to the enlargement of figure 1, this shape coupling is obtained between "V"-shaped cuts 28, which are made in an axial direction in the flanges 22 of the end portions 21, and end portions 27 of the meltable element 26, which have a greater diametral section than an intermediate portion of the meltable element 26 and are configured to be inserted into the respective cut 28. The lower end portion of the "V"-shaped cuts 28 preferably comprises a rounded bevel, which is configured to facilitate the shape coupling between the intermediate portion of the meltable element 26 and the cut 28 itself.

The length of the meltable element 26 is such that, once the end portions 27 are housed in the cuts 28, the flanges 22 are flexed so as to be substantially parallel to one another in order to generate a compressing force of the ring 20 acting upon the outer surface of the cylinder 2.

The operation of the gas spring 1 according to the embodiment described above is the following.

When the environmental temperature in the surroundings of the gas spring 1 is below the aforesaid threshold, for example 150°C, the seal element 11 is arranged, in a sealing manner, in the hole 12 of the cylinder 2, held by the sealing device 13. In particular, the meltable element 26, as it is arranged in the cuts 28 of the flanges 22, keeps the ring 20 in a compressing state. In this way, the thrust of the gas under pressure upon the seal element 11 would tend to open the ring 20, which, though, tends to remain closed thanks to the clamping defined by the meltable element 26 with the flanges 22. The dimensions and the materials of the elements described herein can clearly be changed as a function of dimensions of the gas spring 1 and, hence, of the pressure to be borne by the seal element 11 and/or of the temperature at which the gas under pressure is allowed to flow out of the chamber 5.

When the environmental temperature in the surroundings of the gas spring 1 exceeds the aforesaid threshold, which is equal to the melting temperature of the meltable element 26, the latter starts melting. In this way, the flanges 22 can go back to their original shape and the ring 20 is no longer in a compressing state in order to balance the pressure of the gases upon the seal element 11. As a consequence, the latter can slip out of the hole 12 and allow the gas under pressure to flow out of the chamber 5, thus avoiding the expulsion of the stem 4.

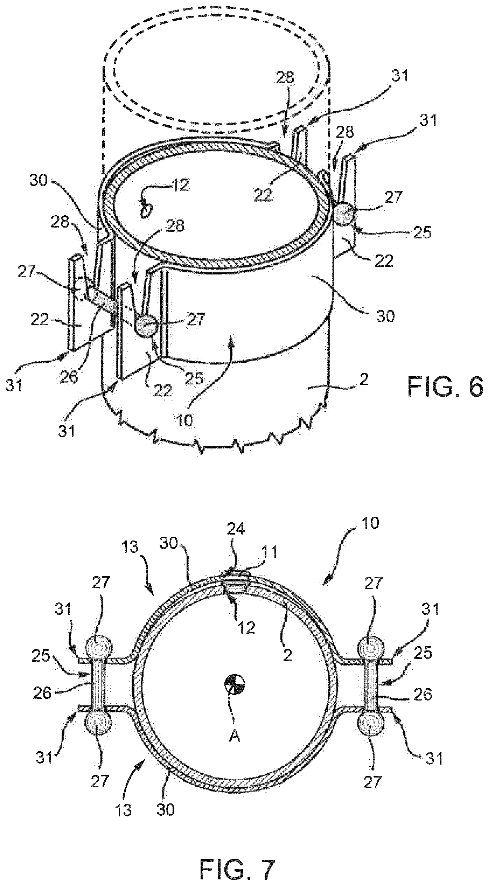

According to an alternative embodiment, which is shown in figures 6 and 7, the sealing device 13 comprises two semicircular elements 30, each having respective end portions 31, each having flanges 33 extending in a radial direction from a central portion of the semicircular elements 30 along a direction joining the longitudinal axis A of the cylinder 2.

One of the two semicircular elements 30 carries the seal element 11, for example as described above, and faces the other semicircular element 30 in such a way that the end portions 31 of a first semicircular element 30 face the ones of the other semicircular element 30.

The sealing device 13 according to this alternative embodiment advantageously comprises, between the two pairs of flanges 33 of the end portions 33, respective meltable elements 26, which are manufactured and coupled to the flanges 33 as described above.

The operation of the gas spring 1 according to the embodiment described above is the following.

The operation is similar to the one of the preferred embodiment of the invention; when the environmental temperature in the surroundings of the gas spring 1 is below the aforesaid threshold, for example 150°C, the seal element 11 is arranged, in a sealing manner, in the hole 12 of the cylinder 2, held by the sealing device 13. In particular, the meltable elements 26, as they are arranged in the cuts 28 of the flanges 33, keep the semicircular elements 30 in a compressing state on the outer surface of the cylinder 2. In this way, the thrust of the gas under pressure upon the seal element 11 would tend to separate the semicircular elements 30 from one another, which, though, tend to remain closed thanks to the clamping defined by the meltable elements 26 with the flanges 33.

When the environmental temperature in the surroundings of the gas spring 1 exceeds the aforesaid threshold, which is equal to the melting temperature of the meltable elements 26, they start melting. In this way, the flanges 33 can go back to their original shape and the semicircular elements 30 are no longer in a compressing state in order to balance the pressure of the gases upon the seal element 11. As a consequence, the latter can slip out of the hole 12 and allow the gas under pressure to flow out of the chamber 5, thus avoiding the expulsion of the stem 4.

Owing to the above, the advantages of the gas spring 1 according to the invention are evident.

The safety device 10, in a simple and economic fashion, helps prevent the stem from being suddenly expelled due to a overheating of the gas spring 1 with consequent increase of the pressure of the gas contained in the chamber 5.

The use of a seal element 11, which is forcedly held in a hole 12, leads, in an economic fashion, to the creation of an outlet for the gases under overpressure of the gas spring, with no need for substantial structural changed compared to existing gas springs.

The use of a ring 20 or of semicircular elements arranged around the cylinder 2 allows manufacturers to obtain sealing devices 13 of the seal element 11 which can be deemed to be reliable and easy to be used.

The use of holding means 25 for the seal element 13, which are made of a meltable material, leads to a precise control of the temperature at which the gases contained in the chamber 5 are to be let out of the latter.

Finally, the gas spring 1 according to the invention can be subjected to changes and variants, which, though, do not go beyond the scope of protection set forth in the claims.

The cylinder 2 and the piston 3 can obviously have different dimensions and be connected to different elements of a vehicle, as it is known.

The safety device 10 can be manufactured in a different manner, for example it could comprise a predefined-pressure relief valve housed inside the hole 12, or it could be arranged in a different position from the one described above.

The sealing device 13 and the holding element 25 can be manufactured with different shapes and materials, without for this reason losing their function.

In particular, the size, the shape and the material of the meltable element 26 can be changed in order to change the melting temperature of the element 26 itself and control the opening of the ring 20 accordingly.

## Claims

1. A gas spring (1) for a vehicle comprising a cylinder (2) and a piston (3) adapted to slide in said cylinder, said cylinder (2) and said piston (3) defining a chamber (5) between one another, adapted to contain the gas under pressure, said gas spring (1) comprising a safety device (10) configured to allow the outflow of said gas under pressure from said chamber (5) when the environmental temperature around said gas spring (1) reaches a pre-set temperature **characterised in that** said safety device (10) comprises a seal element (11) and **in that** said cylinder (2) comprises a hole (12) bored so as to allow the communication of said chamber (5) with the external environment, said seal element (11) being housed in a sealed manner in said hole (12) when said environmental temperature is lower than said pre-set threshold and said seal element (11) slides out of said hole (12) allowing the outflow of said gas from said cylinder (2) when said environmental temperature is higher than said pre-set threshold.

2. The gas spring according to claim 1, wherein said seal element (11) is kept in said hole (12) by a sealing device (13) configured to exert a force such as to balance the pressure of said gas on said seal element (11) when said environmental temperature is lower than a pre-set threshold and said sealing device (11) exerting a force lower than that needed to balance the pressure of the gas on said seal element (11) when said environmental temperature is lower than a pre-set threshold.

3. The gas spring according to claim 2, wherein said sealing device (13) comprises holding means (25) configured to vary the sealing force of said sealing device (13) according to the environmental temperature.

4. The gas spring according to claim 3, wherein said sealing device (13) comprises a ring (20) having a diameter that allows it to be housed on an outer surface of said cylinder (2) and cooperate with said seal element (11) for exerting said sealing force, said metal ring (20) being open and comprising two end portions (21) between which said holding means (25) are housed.

5. The gas spring according to claim 3 or 4, wherein said holding means (25) are made in thermoplastic material configured to melt at a pre-set temperature.

6. The gas spring according to claim 4 or 5, wherein said holding means (25) comprise a meltable element (26) configured to define a positive connection with said end portions (21) of said ring (20) so as to keep said ring (20) closed on said outer surface of said cylinder (2).

7. The gas spring according to one of the preceding claims, wherein that said seal element (11) is made in plastic material.

8. The gas spring according to one of the claims 2 to 6 or claim 7 when depending on claim 2, wherein said seal element (11) is carried by said sealing device (13).

9. A vehicle comprising a gas spring according to any one of the previous claims.

## Patentansprüche

1. Eine Gasfeder (1) für ein Fahrzeug, umfassend einen Zylinder (2) und einen Kolben (3), dazu eingerichtet, in dem Zylinder zu gleiten, welcher Zylinder (2) und welcher Kolben (3) eine Kammer (5) zwischen sich begrenzen, eingerichtet, um Gas unter Druck zu beinhalten, und welche Gasfeder (1) eine Sicherheitsvorrichtung (10) umfasst, dazu eingerichtet, das Ausströmen des Gases unter Druck aus der Kammer (5) zuzulassen, wenn die Umgebungstemperatur um die Gasfeder (1) herum einen vorbestimmten Temperaturwert erreicht, **dadurch gekennzeichnet, dass** die Sicherheitsvorrichtung (10) ein Dichtungselement (11) umfasst und dass der Zylinder (2) ein gebohrtes Loch (12) umfasst, welches eine Verbindung der Kammer (5) mit der Umgebung zulässt, wobei das Dichtungselement (11) dicht in dem Loch (12) sitzt, wenn die Umgebungstemperatur niedriger ist als der vorbestimmte Schwellwert, und das Dichtungselement (11) aus dem Loch (12) herausgleitet und das Ausströmen des Gases aus dem Zylinder (2) gestattet, wenn die Umgebungstemperatur höher ist als der vorbestimmte Schwellwert.

2. Gasfeder gemäß Anspruch 1, bei welcher das Dichtungselement (11) in dem Loch (12) durch eine Dichtungsvorrichtung (13) gehalten wird, dazu eingerichtet, eine Kraft auszuüben, welche den Druck des Gases auf das Dichtungselement (11) ausgleicht, wenn die Umgebungstemperatur niedriger ist als ein vorbestimmter Schwellwert, und wobei die Dichtungsvorrichtung (11) eine Kraft ausübt, die niedriger ist als diejenige, die erforderlich ist, um den Druck des Gases auf das Dichtungselement (11) auszugleichen, wenn die Umgebungstemperatur niedriger ist als ein vorbestimmter Schwellwert.

3. Gasfeder gemäß Anspruch 2, bei welcher die Dichtungsvorrichtung (13) Haltemittel (25) umfasst, dazu eingerichtet, die Dichtungskraft der Dichtungsvorrichtung (13) entsprechend der Umgebungstemperatur zu variieren.

4. Gasfeder gemäß Anspruch 3, bei welcher die Dichtungsvorrichtung (13) einen Ring (20) umfasst, mit einem Durchmesser, der es ihm gestattet, auf einer äußeren Oberfläche des Zylinders (2) angebracht zu werden und mit dem Dichtungselement (11) zur Ausübung der Dichtungskraft zusammenzuwirken, wobei der Metallring (20) offen ist und zwei Endabschnitte (21) umfasst, zwischen welchen die Haltemittel (25) vorgesehen sind.

5. Gasfeder gemäß Anspruch 3 oder 4, bei welcher die Haltemittel (25) aus einem thermoplastischen Material bestehen, dazu vorgesehen, bei einer vorbestimmten Temperatur zu schmelzen.

6. Gasfeder gemäß Anspruch 4 oder 5, bei welcher die Haltemittel (25) ein schmelzbares Element (26) umfassen, dazu vorgesehen, eine positive Verbindung mit den Endabschnitten (21) des Rings (20) festzulegen, derart, dass der Ring geschlossen auf der äußeren Oberfläche des Zylinders (2) gehalten wird.

7. Gasfeder gemäß einem der vorhergehenden Ansprüche, bei welcher das Dichtungselement (11) aus einem Kunststoffmaterial hergestellt ist.

8. Gasfeder gemäß einem der Ansprüche 2 bis 6 oder Anspruch 7 in Abhängigkeit von Anspruch 2, bei welcher das Dichtungselement (11) von der Dichtungsvorrichtung (13) getragen wird.

9. Fahrzeug, umfassend eine Gasfeder gemäß einem der vorhergehenden Ansprüche.

## Revendications

1. Ressort à gaz (1) pour un véhicule comprenant un cylindre (2) et un piston (3) adapté pour coulisser dans ledit cylindre, ledit cylindre (2) et ledit piston (3) définissant une chambre (5) entre eux, adaptée pour contenir le gaz sous pression, ledit ressort à gaz (1) comprenant un dispositif de sécurité (10) configuré pour permettre l'écoulement sortant dudit gaz sous pression depuis ladite chambre (5) lorsque la température environnementale autour dudit ressort à gaz (1) atteint une température prédéfinie, **caractérisé en ce que** ledit dispositif de sécurité (10) comprend un élément joint (11) et **en ce que** ledit cylindre (2) comprend un trou (12) percé de manière à permettre la communication de ladite chambre (5) avec l'environnement externe, ledit élément joint (11) étant logé d'une manière étanche dans ledit trou (12) lorsque ladite température environnementale est inférieure audit seuil prédéfini et ledit élément joint (11) coulisse hors dudit trou (12) permettant l'écoulement sortant dudit gaz dudit cylindre (2) lorsque ladite température environnementale est supérieure audit seuil prédéfini.

2. Ressort à gaz selon la revendication 1, dans lequel ledit élément joint (11) est maintenu dans ledit trou (12) par un dispositif d'étanchéité (13) configuré pour exercer une force de manière à équilibrer la pression dudit gaz sur ledit élément joint (11) lorsque ladite température environnementale est inférieure à un seuil prédéfini et ledit dispositif d'étanchéité (11) exerçant une force inférieure à celle nécessaire pour équilibrer la pression du gaz sur ledit élément joint (11) lorsque ladite température environnementale est inférieure à un seuil prédéfini.

3. Ressort à gaz selon la revendication 2, dans lequel ledit dispositif d'étanchéité (13) comprend un moyen de maintien (25) configuré pour faire varier la force d'étanchéité dudit dispositif d'étanchéité (13) en fonction de la température environnementale.

4. Ressort à gaz selon la revendication 3, dans lequel ledit dispositif d'étanchéité (13) comprend un anneau (20) présentant un diamètre qui lui permet d'être logé sur une surface extérieure dudit cylindre (2) et de coopérer avec ledit élément joint (11) pour exercer ladite force d'étanchéité, ledit anneau métallique (20) étant ouvert et comprenant deux parties d'extrémité (21) entre lesquelles est logé ledit moyen de maintien (25).

5. Ressort à gaz selon la revendication 3 ou 4, dans lequel ledit moyen de maintien (25) est fabriqué en un matériau thermoplastique configuré pour fondre à une température prédéfinie.

6. Ressort à gaz selon la revendication 4 ou 5, dans lequel ledit moyen de maintien (25) comprend un élément pouvant fondre (26) configuré pour définir une liaison positive avec lesdites parties d'extrémité (21) dudit anneau (20) de manière à maintenir ledit anneau (20) fermé sur ladite surface extérieure dudit cylindre (2).

7. Ressort à gaz selon l'une des revendications précédentes, dans lequel ledit élément joint (11) est fabriqué en un matériau plastique.

8. Ressort à gaz selon l'une des revendications 2 à 6 ou la revendication 7, lorsqu'elle dépend de la revendication 2, dans lequel ledit élément joint (11) est porté par ledit dispositif d'étanchéité (13).

9. Véhicule comprenant un ressort à gaz selon l'une quelconque des revendications précédentes.
